# EUROPEAN PATENT SPECIFICATION

(11) **EP 3 125 035 B1**
(45) Date of publication and mention of the grant of the patent: **01.11.2017**
(21) Application number: 16188646.0
(22) Date of filing: 04.04.2012
(51) Int. Cl.: G02F 1/167, G06F 1/16, G02F 1/1333

(54) **A DISPLAY STRUCTURE**
ANZEIGESTRUKTUR
STRUCTURE D'AFFICHAGE

(30) Priority: 13.04.2011 US 201161474812 P
(43) Date of publication of application: 01.02.2017
(62) Divisional of application: 12720998.9
(73) Proprietor: Samsung Electronics Co., Ltd., Suwon-si, Gyeonggi-do 16677 (KR)
(72) Inventor: HUITEMA, Hjalmar, NL-5616 LZ Eindhoven (NL); VAN VEENENDAAL, Erik, NL-5616 LZ Eindhoven (NL)
(74) Representative: HGF Limited

(56) References cited:
- WO-A1-2006/064456
- WO-A1-2007/144549
- US-A1- 2007 132 922
- US-B1- 6 577 496

## Description

### Field Of The Invention

The invention relates to a display structure. The display structure may comprise a first viewing surface and a second opposed viewing surface.

### Background Of The Invention

Display structures known from the art have a single viewing surface. Usually, when the display structure comprises a number of layers including an active matrix layer, the viewing surface is selected to be positioned furthermost away from the active matrix layer.

US-2007/132922-A1 discloses an LCD module applicable to various devices. The LCD module includes a color filter substrate on which color filter patterns are arranged; a TFT substrate spaced apart from the color filter substrate at a predetermined distance and having one side on which TFT electrodes are arranged, wherein liquid crystal is filled between the color filter substrate and the TFT substrate; a first reflective plate installed outside the TFT substrate at a predetermined distance therebetween and selectively serving as a reflective plate; a second reflective plate installed outside the color filter substrate at a predetermined distance therebetween and selectively serving as a reflective plate; and a lamp installed at a side of the LCD module and emitting particular light. Accordingly, using the single LCD module, images can be displayed on both sides of the display device.

US-6577496-B1 discloses a foldable display device coupled to a non-rigid support mechanism movable between an unfolded and a folded position. In one embodiment, the e-ink display device is dual sided and both sides can display information as well as accept touch screen commands. One side of the display device is used in the unfolded position and the opposite side is used in the folded position. In the unfolded position, the display device has a Personal Digital Assistant (PDA) form factor, and the entire area of one side of the display device is viewable. The display device is supported within the non-rigid support mechanism such that it lies in a flat plane in the unfolded position, and there is no loss of viewable area due to folding of the display device. The two sides of the non-rigid support mechanism are coupled for movement between a folded and an unfolded position and the display device is folded in a bend radius that precludes any disruption to the display area. Moving the support mechanism from the unfolded position to the folded position folds the display device about an axis that divides the display device into two equal rectangles. In the folded position, the display device has a candy bar form factor useful in cell phone applications, and the viewable area is about one half that of the PDA form factor used in the unfolded position. The non-rigid support mechanism holds the viewable area of the display device in a flat plane in the folded position.

WO-2007/144549-A1 discloses an electronic document reading device, that is a device such as an electronic book which presents a document to a user on a display to enable the user to read the document. The device comprises: an electronic page having at least one display surface; a page support, said page being attached to said page support such that said page is physically turnable; a memory to store at least part of a document to be read; a page driver coupled to said memory, to drive said page display surface to display a first stored portion of said document; a sensing system to sense turning of said page; and an update control system coupled to said sensing system to control update of said display surface with a second stored portion of said document responsive to sensing of said page turning; and wherein said update control system is configured to control said updating such that said updating is at least partially hidden from a viewpoint of a user of the device. The features of the preamble of claim 1 are known from that document.

### Summary Of The Invention

It is a disadvantage of the display structures known from the art that such devices may have limited functionality.

It is an object of the invention to increase functionality of the display structures known from the art.

According to a first aspect of the present invention there is provided a display structure comprising: a flexible display having a first viewing surface and a second viewing surface opposed to the first viewing surface; and a mechanical support adapted to at least partially collapse and extend the flexible display and enable interchanging the first viewing surface and the second viewing surface with respect to a viewing direction, wherein the mechanical support comprises a roller for accommodating the flexible display when collapsed, the roller cooperating with an extension body arranged for extending the flexible display from a collapsed state; and wherein the roller comprises an axis, the extension body being rotatable about the axis for interchanging the first viewing surface and the second viewing surface with respect to the viewing direction.

According to a second aspect of the present invention there is provided an electronic apparatus comprising the display structure.

It is found that display structures, which may be based on TFT technology, may be effectively used for generating two opposed viewing surfaces yet using the same display medium. The display medium may be a layer provided in a stack, wherein the display medium is a reflective layer. For example, when a reflective display medium is embodied as a reflective layer, the light reflected by the display medium, such as an electrophoretic medium, may be reflected at both sides of the display generating two respective images.

The first viewing surface and/or the second viewing surface may be provided with a color filter for enabling generation of a color image.

This is found to be advantageous because the display structure may be adapted and driven to generate a color image at the first viewing surface and a monochrome image at the second viewing surface. It will be appreciated that the color image may have a lower intensity, contrast and image resolution than the monochrome image because for generation of a color pixel a suitable number (e.g. three) of regular pixels may be used. However, in this way optimizing of a display for a certain type of content is possible. Preferably, for the display medium an electrophoretic material is used.

The display medium may comprise an electrophoretic material.

The first viewing surface may be adapted to generate a color image and the second viewing surface is adapted to generate a monochrome image. This may be advantageous as the second viewing surface may be used as a programmable skin for the device. For example, during use the programmable skin may be adapted to display a substantially inverted image of the content being viewed on the first viewing surface.

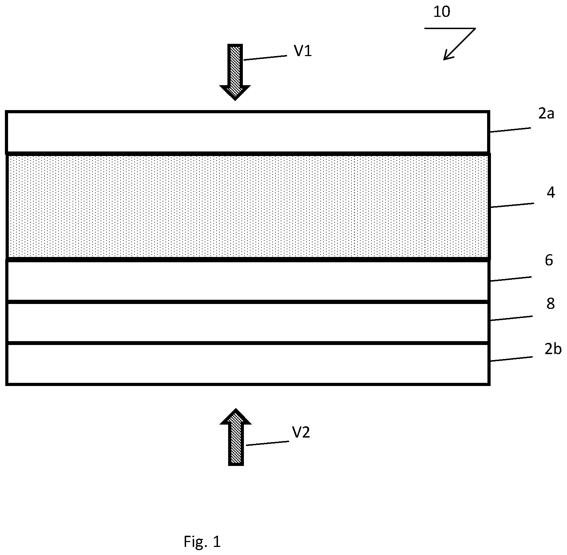

It will be appreciated that the display structure may be used for the two sides as a main viewing direction. This will be discussed in more details with reference to Figure 1.

The display medium may be controllable by a driving circuit, wherein the driving circuit is adapted to generate a legible image either on the first viewing surface or on a second viewing surface.

It will be appreciated that those skilled in the art will readily understand that for a reflective display only one side of the display stack will generate a legible image, as on a rear side the image will appear to be different, for example for an electrophoretic display with two monochrome or identical color viewing sides substantially inverted.

For a specific case when for the display medium an electrophoretic display, capable of generating n distinct grey levels, is selected the following may be applied. Starting from a known grey level i on a further viewing side of the display and knowing the control voltage transition required to generate a grey level j, it is possible to determine a voltage transition required on the opposite side of the display to generate the same effect. Assuming three level pulse width modulation driving (VPixei can be set to -15V, 0V or 15V), the required transition for the opposite (second) viewing surface may be formed by changing for each frame -15 V to either +15V or 0V and +15V to -15 V, for example.

In order to accurately implement the voltage transition on the opposite side of the display corresponding to a legible image, as may be generated on the front side of the display, the display structure in accordance with a further aspect of the invention comprises a unit arranged for operating the driving circuit for causing a desired viewing surface to generate the legible image.

For driving an electrophoretic display generally a Look Up Table (LUT) structure is used that describes the waveforms needed to create transitions between grey levels or colors on the display. The waveforms are generated by the display controller that is connected to the driver ICs of the display. The LUT is typically stored in a memory integrated in or attached to the controller. The controller is connected to the host CPU of the device.

When driving the display typically the LUT is optimized in such a way that the image quality on one side of the display is optimal. Therefore the image on the other side does not necessarily have grey levels or colors that are as clearly defined. When switching the viewing side of the display the new viewing side therefore may need to be updated to become the primary viewing side with clearly defined grey levels or colors.

This can be done, for example, by using an initiation LUT. This initiation LUT describes the waveforms needed to change the grey levels or colors displayed on a side that was not the primary viewing side into grey levels used for the primary viewing side. When this initiation LUT is used by the controller to drive the display, the new viewing side is prepared to display the content in the most optimal way and the normal LUT can subsequently be used to change grey levels or colors.

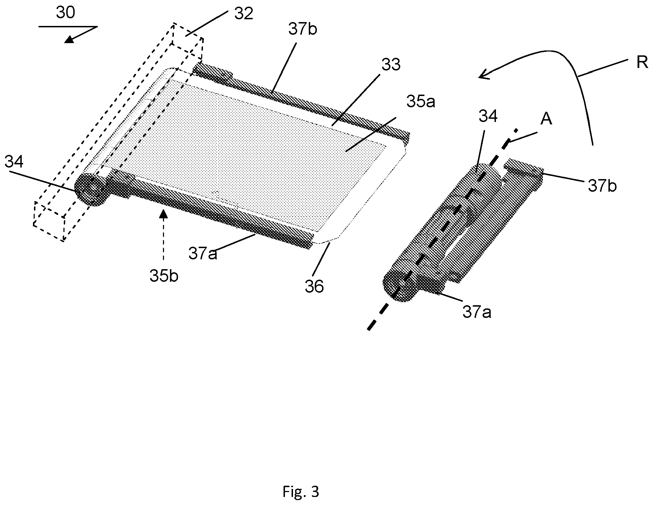

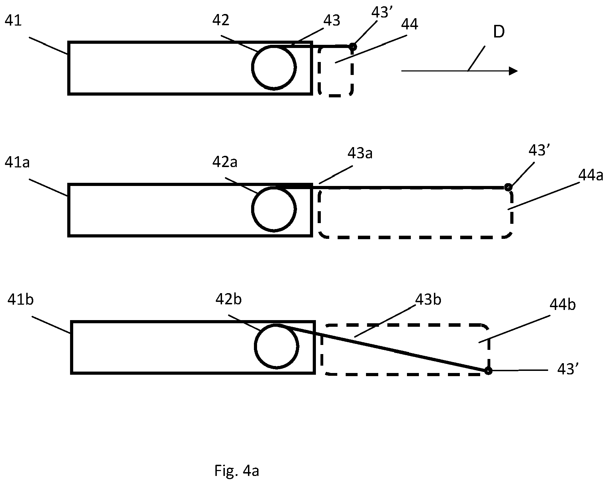

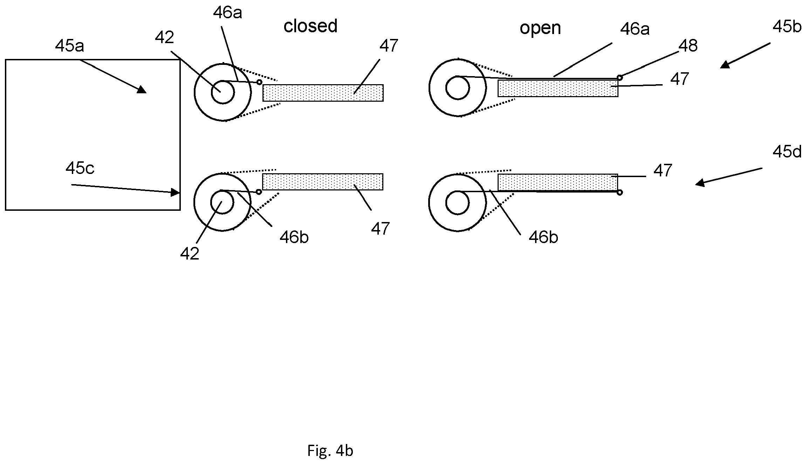

It will be appreciated that a plurality of arrangements may be envisaged. First, the mechanical support may be arranged to support the display enabling a mere twist of the display body so that a desirable viewing surface may be provided for a given viewing direction. Alternatively, the mechanical means may be arranged to extend a flexible collapsible display in such a way that a desirable viewing surface may be accessed. More details on these embodiments will be presented with reference to Figures 3 and 4.

More details on the mechanical support are presented with reference to Figure 3.

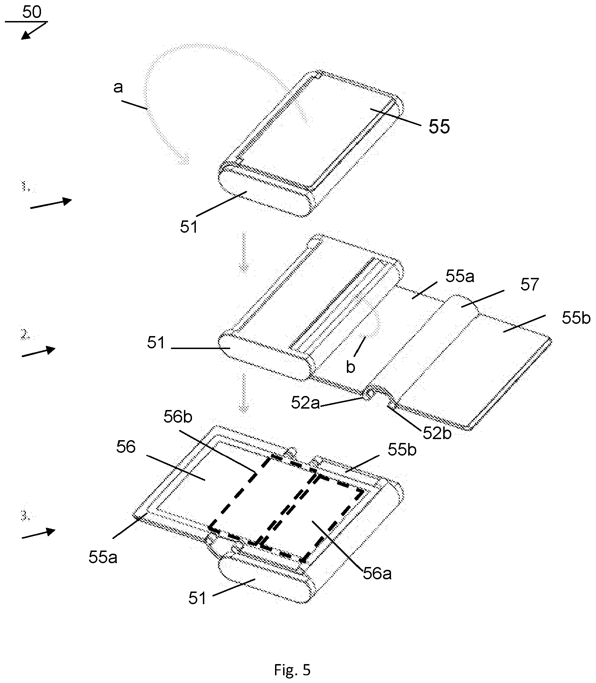

Alternatively, the mechanical support may comprise a body; the flexible display may be adapted to be wrapped about the body, wherein the body comprises at least one optically transparent area cooperating with the flexible display structure. More details on this embodiment will be discussed with reference to Figure 5.

There is further disclosed a method for manufacturing a display structure comprising a display medium having a first viewing surface, the method comprising the step of providing for the same display medium a second viewing surface opposed to the first viewing surface. The display medium may be a layer provided in a stack, the stack comprising at least one reflective layer adapted to cooperate with the display medium.

A color filter cooperating with the first viewing surface may be provided. In this way the display structure may generate a color image at one side and a monochromatic image at the other side. Although for the monochromatic image a black and white image is contemplated, it is also possible that a side of the display structure opposed to a side generating a color image may be adapted to generate a black and white and yellow image, for example. It will be appreciated that other combinations are contemplated as well.

The method may further comprise a step of adapting the display medium with a driving circuit, the driving circuit being adapted to generate a legible image either on the first viewing surface or on a second viewing surface.

These and other aspects of the invention will be discussed with reference to drawings wherein like reference numerals refer to like elements. It will be appreciated that the drawings are presented for illustrative purposes only and may not be used for limiting the scope of the appended claims.

### Brief Description Of The Drawings

Figure 1 presents in a schematic way a display structure
Figure 2 presents in a schematic way a display medium of the display structure.
Figure 3 presents in a schematic way an embodiment of the display structure according to an aspect of the invention.
Figure 4a presents in a schematic way an embodiment of an extension body cooperating with a mechanical means used for supporting a display structure according to a still further embodiment of the invention.
Figure 4b presents in a schematic way a still further embodiment of an extension body cooperating with a mechanical means according to a still further aspects of the invention.
Figure 5 presents in a schematic way a display structure
Figure 6 presents in a schematic way a smart card comprising the display structure.

### Detailed Description Of The Drawings

Figure 1 presents in a schematic way of a display structure 10. The display structure 10 comprises a stack of layers 2a, 2b, 4, 6, 8. The layers 2a and 2b correspond to the respective substrate layers. The layer 4 is a color filter layer, which may be embodied using different means. The layer 6 is a display medium layer, preferably a layer of an electrophoretic material. The layer 8 underneath the display medium layer is the active matrix layer used for controlling the display medium layer 6. For an electrophoretic material the active matrix layer 8 may be adapted to supply suitable control voltages to respective capsules of an electrophoretic material. The last layer of the display medium layer 6 is a common electrode layer. The applied control voltages create an electric field over the material between the active matrix layer 8 and the common electrode that is part of the display medium layer 6. Two viewing surfaces are provided, namely a first viewing surface V1 and a second viewing surface V2. For this purpose the stack comprises a reflective-type display medium. It will be appreciated that the first viewing surface V1 may be provided either at a front side of the display structure 10 or at a back side of the display structure 10.

In order to enable generation of a color image the stack comprises a color filter 4. It will be appreciated that the color image may have a lower brightness and a lower resolution as compared to a black and white image which may be generated at the second viewing surface. In an alternative the second viewing surface V2 may be used as a programmable skin while a suitable image is being observed on the first viewing surface V1. It will be further appreciated that it is possible that the first viewing surface V1 and/or the second viewing surface V2 is adapted to be used partially, i.e. that only a part of otherwise available surface is used as a display area. It will be still further appreciated that another color filter may be implemented between the display medium and the second viewing surface, for example between layers 6 and 8 or between layers 8 and 2b.

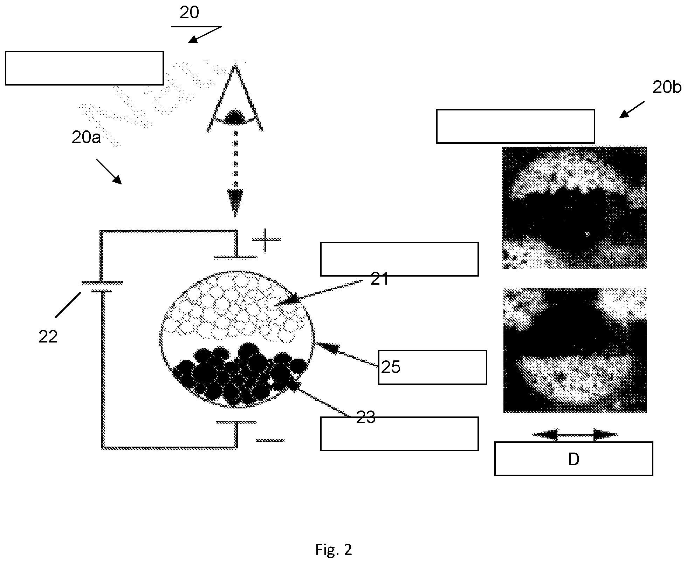

Figure 2 presents in a schematic way of a display medium of the display structure. For clarity reasons a schematic view of an isolated electrophoretic capsule is presented. Item 20a schematically illustrates an electrophoretic capsule 20 comprising white particles 21 and black particles 23 encapsulated in a suitable body 25. Preferably, the body 25 is square-shaped, although other geometries, like spherical shape, may be used. Respective movement of the white and black particles in the body 25 is controlled by means of application of a suitable voltage from a source 22. As has been indicated earlier, the TFT's positioned at corresponding display pixels are used to apply suitable voltage to the bodies 25 for black/white or grey switching. Item 20b shows a photograph of an electrophoretic capsule, wherein a diameter of the capsule D is about 20 - 40 µπ 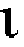 .

In order to suitable change image content on the electrophoretic display 10, the new image information may be written for a certain amount of time, for example during a period of 500 ms - 1000 ms. As the refresh rate of the active-matrix is usually higher this results in addressing the same image content during a number of frames. For example, at a frame rate of 50 Hz, 10 to 50 frames long. A schematic drawing of the electrophoretic principle with capsule photographs in the white and the black state are shown in item 20b. Addressing of the electrophoretic capsule from black to white, for example, requires the pixel capacitors to be charged to -15 V during 200 ms to 1000 ms. During this time the white particles drift towards the top (common) electrode, while the black particles drift towards the bottom (active-matrix back plane) electrode. Switching to black requires a positive pixel voltage and at 0 V over the capsules no switching action takes place.

For active-matrix back planes with electrophoretic capsules the typical voltages may be, for example, a row select voltage of -25 V, a row non-select voltage of +25 V, a column voltage between -15 V and +15 V and a common electrode voltage of 2.5 V, where the row select and non-select and the common electrode voltages are based on the use of a p-type TFT. For n-type TFTs these voltages have the opposite sign. These are relatively high voltages, due to the high voltage electrophoretic display effect. The advantage of using electrophoretic capsules as the display effect instead of LC material is that such capsules are bi-stable. Addressing is therefore only necessary during an image update (∼ 1 sec), while the active-matrix is at rest between image updates.

Figure 3 presents in a schematic way an embodiment of the display structure according to an aspect of the invention. In this embodiment the display structure forms part of an electronic device. The electronic device 30, notably a miniature portable computer, such as a palmnote, a telephone, or the like comprises a housing 32 wherein a flexible display 36 can be stored when not in use. The flexible display 36 is preferably realized as a rollable display, which is conceived to be wound around a suitable roller 34. The roller has an axis of rotation A (see right hand side of the Figure 3). The flexible display 36 is preferably realized using electrophoretic technology. The flexible display comprises edge regions, such as the area 33. The area 33 may cooperate with a suitable guide 37a, 37b for simplifying extension of the display 36 outside the housing 32.

When the display 36 is extended the first viewing surface 35a may be observed. It will be appreciated that although the first viewing area 35a is depicted extending along substantially the whole emerging surface of the display 36, it is also possible that a number of display areas each adapted to display a specific content may be provided.

In accordance with an aspect of the invention the guides 37a, 37b forming part of a mechanical body supporting the display 36 in use may be rotatable about the axis A, which is schematically depicted with an arrow R, see the right hand side of Figure 3. By rotating (or swinging) the guides 37a, 37b about the axis A the user may select whether he wishes to view the first viewing surface 35a, or the second viewing surface 35b.

Figure 4a presents in a schematic way an embodiment of an extension body cooperating with a mechanical means used for supporting a display structure according to a still further embodiment of the invention. The upper drawing schematically depicts a cross-section of a housing 41 supporting the flexible collapsible display 43, which is rolled up about a roller 42 upon storage. An outer edge 43' of the display 43 is affixed to a displaceable body 44, which may be moved in the direction D to extend the display to the exterior of the housing 41. It will be appreciated that two embodiments of the extender 44 may be envisaged. First, the extender may be embodied as a substantially rigid body which has small dimensions, i.e. upon extension of the display 43 the extender 44 does not support a rear surface of the display 43. In this way the rear surface of the display may be observed.

Alternatively, the extender 44a (see the middle sketch) may be provided as an optically transparent body which will support the rear surface of the display 43 'upon extensions thereof from the housing 41a.

It will be appreciated that the extender may also be implemented along the edges of the display as is discussed with reference to Figure 3. Also in this case the rear surface of the display 43a may be observed without interference.

In the lower sketch the outer edge 43' of the display 43b is affixed to a lower part of the extender 44b, so that the display 43b is extended in an oblique or tilted plane. This has an advantage that the display may be subsequently guided over the outer edge of the extender 44b and directed back towards the roll 42b. In this way the other viewing side of the display may be exposed and provided for the user. Preferably, the end stop of the body 44 is rotatable.

Figure 4b presents schematically a still further embodiment of the display structure according to a still further aspect of the invention. In Figure 4b a closed state and an open state of an electronic device comprising the display structure is presented. In view 45a, the display 46a is rolled over the roller 42, discussed in the foregoing. The support means 47 is adapted to support and hold the display 46a when it is extended in the open state, see view 45b. Preferably, the display 46a of the support member 47 is provided with fastening means 48 which is adapted to maintain the display in the extended state.

In the view 45c the roller 42 is moved to a depleted position with respect to the supporting member 47. This position enables extending the display 46b along a lower surface of the supporting member 47. In view 45d it is seen that the display 46b is maintained in the extended state so that the user may view the rear surface of the display structure.

Figure 5 presents in a schematic way a display structure. An electronic device 50 comprising the display structure as is set forth in the foregoing may comprise a body of the housing 51 about which the flexible display is wrapped in use. The housing 51 may comprise a substantially rigid cover 55 arranged to receive the flexible display and to be collapsed or extended together with it. In this case the cover portion 51 may undergo a movement as indicated with the arrow a.

The electronic device 50 may be implemented as a palm-top computer, or a mobile phone, for example. It is noted that other examples of the electronic device, like computer monitor, electronic display screen or the like are contemplated as well. The cover 52 may comprise hinged bending areas 52a, 52b interconnecting cover portions 55a, 55b by means of a connector 57. The cover portions and the connector are shaped to protect and to support the display in use. The cover portions 55a, 55b, or the portions thereof, may be manufactured from an optically transparent material for enabling viewing of a rear surface of the display dwelling on the cover portions 55a, 55b, 57.

The cover portions may be displaceable with respect to the core of the housing 51 as is schematically indicated with the arrow b, sketch 2. As a result the display 56a may be observed from its front surface. It will be appreciated that the display 56 may be suitably electronically or hardware partitioned into a suitable number of sub-areas 56a, 56b arranged to feed-back specific content. The rear surface of the display 56 which may be viewed through the optically transparent cover 55a, 55b, 57 may be used as a programmable skin.

This skin can provide a user selectable pattern on the outside of the device when it is not in use. Alternatively it can provide a number of patterns that can change randomly in time, in a timed sequence or depending on an event, like an incoming e-mail, sms or phone call. The skin can be monochrome or color and the pattern can be a still image or animated.

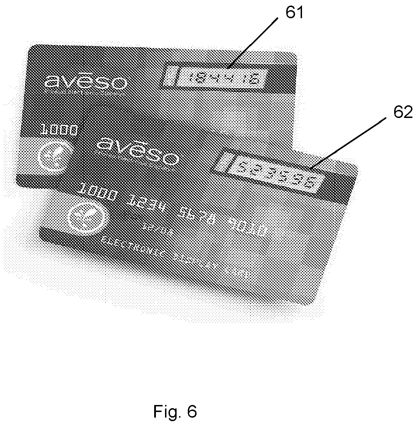

An additional example could simply be a flexible display device, like a smartcard where the image can be viewed from two sides. The two viewing sides will be showing a substantially inverted image of the same content, see Figure 6.

Figure 6 presents schematically a smart card comprising a display structure. The display structures 61, 62, may be used for displaying a security number, for example. It will be appreciated that such smart card may be used for different purposes, such as travel, insurance, electronic wallets and so forth.

While specific embodiments have been described above, it will be appreciated that the invention may be practiced otherwise than as described. The descriptions above are intended to be illustrative, not limiting.

## Claims

1. A display structure comprising;
a flexible display (36) having a first viewing surface (35a) and a second viewing surface (35b) opposed to the first viewing surface (35a); and
a mechanical support adapted to at least partially collapse and extend the flexible display (36) and enable interchanging the first viewing surface (35a) and the second viewing surface (35b) with respect to a viewing direction,
wherein the mechanical support comprises a roller (34) for accommodating the flexible display when collapsed, the roller (34) cooperating with an extension body (44) arranged for extending the flexible display (36) from a collapsed state; and
wherein the roller (34) comprises an axis (A), **characterised in that** the extension body (44) is rotatable about the axis (A) for interchanging the first viewing surface (35a) and the second viewing surface (35b) with respect to the viewing direction.

2. The display structure according to claim 1, wherein the mechanical support further comprises a body, the flexible display (36) being adapted to be wrapped about the body, the body comprising at least one optically transparent area cooperating with the flexible display (36).

3. An electronic apparatus (30) comprising the display structure according to claim 1 or claim 2.

## Patentansprüche

1. Eine Anzeigestruktur, die Folgendes umfasst:
eine flexible Anzeige (36) mit einer ersten Anzeigefläche (35a) und einer zweiten, der ersten Anzeigefläche (35a) gegenüberliegenden Anzeigefläche (35b); und
einen mechanischen Träger, der dafür ausgelegt ist, die flexible Anzeige (36) zumindest teilweise zuzuklappen oder zu erweitern und das Austauschen der ersten Anzeigefläche (35a) und der zweiten Anzeigefläche (35b) in Bezug auf eine Anzeigerichtung zu ermöglichen,
wobei der mechanische Träger eine Rolleinheit (34) zur Aufnahme der flexiblen Anzeige im zusammengeklappten Zustand umfasst, wobei die Rolleinheit (34) mit einem Erweiterungskörper (44) zusammenwirkt, der dafür ausgelegt ist, die flexible Anzeige (36) aus einem zusammengeklappten Zustand zu erweitern; und
wobei die Rolleinheit (34) eine Achse (A) umfasst, die **dadurch gekennzeichnet ist, dass** der Erweiterungskörper (44) zum Austauschen der ersten Anzeigefläche (35a) und der zweiten Anzeigefläche (35b) in Bezug auf eine Anzeigerichtung um die Achse (A) drehbar ist.

2. Die Anzeigestruktur nach Anspruch 1, wobei der mechanische Träger weiter einen Körper umfasst, wobei die flexible Anzeige (36) zum Umfassen des Körpers ausgelegt ist, wobei der Körper mindestens einen optisch transparenten Bereich umfasst, der mit der flexiblen Anzeige (36) zusammenwirkt.

3. Eine elektronische Vorrichtung (30), welche die Anzeigestruktur nach Anspruch 1 oder Anspruch 2 umfasst.

## Revendications

1. Une structure d'affichage comprenant :
un dispositif d'affichage souple (36) possédant une première surface de visionnage (35a) et une deuxième surface de visionnage (35b) opposée à la première surface de visionnage (35a), et
un support mécanique adapté de façon à au moins partiellement replier et étendre le dispositif d'affichage souple (36) et permettre une permutation entre la première surface de visionnage (35a) et la deuxième surface de visionnage (35b) par rapport à une direction de visionnage,
où le support mécanique comprend un rouleau (34) destiné à loger le dispositif d'affichage souple lorsqu'il est replié, le rouleau (34) coopérant avec un corps d'extension (44) agencé de façon à étendre le dispositif d'affichage souple (36) à partir d'un état replié, et
où le rouleau (34) comprend un axe (A), **caractérisé en ce que** le corps d'extension (44) est pivotable autour de l'axe (A) de façon à permuter la première surface de visionnage (35a) et la deuxième surface de visionnage (35b) par rapport à la direction de visionnage.

2. La structure d'affichage selon la Revendication 1, où le support mécanique comprend en outre un corps, le dispositif d'affichage souple (36) étant adapté de façon à être enroulé autour du corps, le corps comprenant au moins une zone optiquement transparente coopérant avec le dispositif d'affichage souple (36).

3. Un appareil électronique (30) comprenant la structure d'affichage selon la Revendication 1 ou 2.
